# EUROPÄISCHE PATENTSCHRIFT

(11) **EP 1 433 630 B1**
(45) Veröffentlichungstag und Bekanntmachung des Hinweises auf die Patenterteilung: **01.04.2009**
(21) Anmeldenummer: 03029479.7
(22) Anmeldetag: 19.12.2003
(51) Int. Cl.: B60H 1/34

(54) **Lamellenbetätigungssystem, insbesondere für einen Luftausströmer**
Vanes actuation system, in particular for air vent
Système d'actionnement de lamelles, notamment pour diffuseur d'air

(30) Priorität: 23.12.2002 DE 20219897 U
(43) Veröffentlichungstag der Anmeldung: 30.06.2004
(73) Patentinhaber: TRW Automotive Electronics & Components GmbH, 78315 Radolfzell (DE)
(72) Erfinder: Krause, Reinhard, 95615 Marktredwitz-Brand (DE)
(74) Vertreter: Prinz & Partner

(56) Entgegenhaltungen:
- GB-A- 2 196 421
- US-A- 5 338 252
- US-A- 5 480 350
- US-A- 5 766 070

## Beschreibung

Die Erfindung betrifft ein Lamellenbetätigungssystem, insbesondere für einen Luftausströmer zur Fahrzeugklimatisierung, mit einer ersten Lamelle, die um eine erste Achseschwenkbar in einem Rahmen gehalten ist, und einer zweiten Lamelle, die um eine zweite Achse schwenkbar in dem Rahmen gehalten ist, wobei auf der ersten Lamelle ein Bedienelement angebracht ist.

Ein Lamellenbetätigungssystem der eingangs genannten Art ist aus der US-A-5,766,070 bekannt. Zur Kopplung zwischen dem Bedienelement und den Lamellen wird ein Kugelgelenk verwendet.

Die Aufgabe der Erfindung besteht darin, ein Lamellenbetätigungssystem zu schaffen, das einen besonders kompakten und einfachen Aufbau hat.

Zu diesem Zweck ist bei dem Lamellenbetätigungssystem der eingangs genannten Art vorgesehen, daß das Bedienelement über ein Schiebe-/Kardangelenk mit der zweiten Lamelle verbunden ist. Die Ausrichtung der ersten Lamelle kann unmittelbar durch das Bedienelement eingestellt werden. Die Ausrichtung der zweiten Lamelle wird durch Verschieben des Bedienelements auf der ersten Lamelle eingestellt. Insgesamt ergibt sich ein sehr kompakter Aufbau, wobei das Lamellenbetätigungssystem aus wenigen einzelnen Bauteilen besteht.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen Draufsicht einen Luftausströmer mit einem erfindungsgemäßen Lamellenbetätigungssystem;
- die Figuren 2a und 2b in Schnittansichten entlang den Ebenen a und b von Figur 1 eine erste und eine zweite Lamelle des Luftausströmers;
- die Figuren 3a bis 3d die Lamellen von Figur 2 in einer Seitenansicht, in einer Schnittansicht, einer Draufsicht und einer perspektivischen Ansicht in einer ersten Stellung;
- die Figuren 4a bis 4d die Lamellen von Figur 2 in einer Seitenansicht, einer Schnittansicht, einer Draufsicht und einer perspektivischen Ansicht in einer zweiten Stellung;
- die Figuren 5a bis 5d die Lamellen von Figur 2 in einer Seitenansicht, einer Schnittansicht, einer Draufsicht und einer perspektivischen Ansicht in einer dritten Stellung; und
- die Figuren 6a bis 6d die Lamellen von Figur 2 in einer Seitenansicht, einer Schnittansicht, einer Draufsicht und einer perspektivischen Ansicht in einer vierten Stellung.

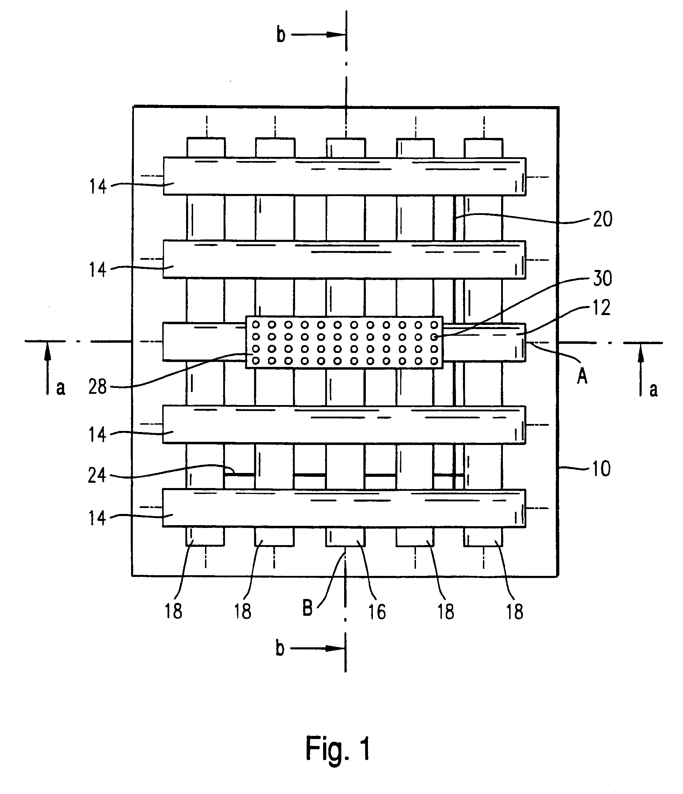

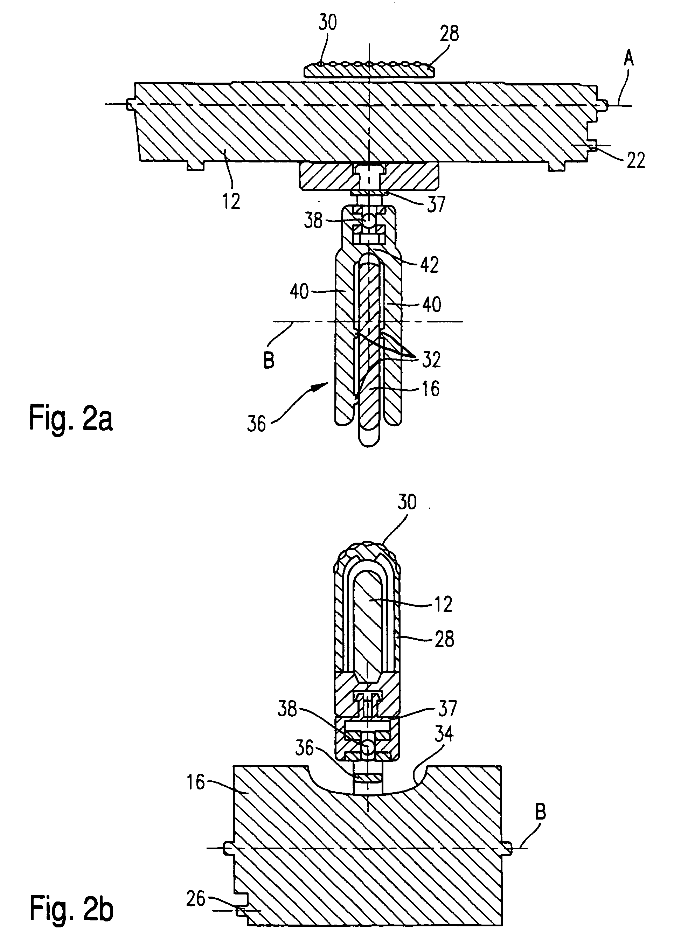

In Figur 1 ist schematisch ein Lamellenbetätigungssystem mit einem Luftausströmer zu sehen, der einen Rahmen 10 aufweist, in welchem eine erste Lamelle 12 um eine erste Achse A schwenkbar gelagert ist (siehe auch die Figuren 2a, 2b). Parallel zur ersten Lamelle 12 sind weitere Lamellen 14 angeordnet, deren Schwenkachsen zur Achse A parallel ist. Es ist grundsätzlich auch möglich, die Lamellen 14 abweichend von einer parallelen Ausrichtung anzuordnen, beispielsweise fächerartig.

Senkrecht zur ersten Lamelle 12 und unterhalb dieser ist im Rahmen 10 eine zweite Lamelle 16 um eine Achse B schwenkbar gelagert. Parallel zur zweiten Lamelle 16 sind weitere Lamellen 18 vorgesehen, deren Schwenkachsen parallel zur Achse B ist. Auch hier gilt, daß die Lamellen 18 grundsätzlich auch abweichend von einer parallelen Ausrichtung angeordnet werden können, beispielsweise fächerartig.

Die erste Lamelle 12 ist mit den weiteren Lamellen 14 durch eine Koppelstange 20 verbunden, die auf einem Lagerzapfen 22 (siehe Figur 2a) gelagert ist. Die zweite Lamelle 16 ist mit den weiteren Lamellen 18 durch eine Koppelstange 24 verbunden, die auf einem Lagerzapfen 26 (siehe Figur 2b) gelagert ist. Die Koppelstangen 20, 22 gewährleisten, daß die erste Lamelle 12 und die weiteren Lamellen 14 einerseits sowie die zweite Lamelle 16 und die weiteren Lamellen 18 andererseits immer parallel zueinander ausgerichtet sind.

Auf der ersten Lamelle 12 ist ein Bedienelement 28 so angebracht, daß es entlang der Achse A auf der ersten Lamelle 12 verschoben werden kann. Das Bedienelement 28 umgreift zu diesem Zweck die erste Lamelle 12 mit geringem Spiel, so daß keine separate Führung notwendig ist. Auf der außenliegenden Seite ist das Bedienelement 28 mit einer Vielzahl von kleinen Vertiefungen 30 versehen, die es einem Bediener erleichtern, das Bedienelement zu verstellen.

Zwischen dem Bedienelement 28 und der zweiten Lamelle 16 ist ein Schiebe/Kardangelenk angeordnet, das aus einer Gabel 36, einem Clips 37 und einem Kardankreuz 38 besteht. Der Clips ist hier drehbar im Bedienelement 28 aufgenommen, könnte aber auch fest dort angebracht sein. Mittels des Kardankreuzes 38 sind die Gabel 36 und der Clips 37 nach Art eines Kardangelenks miteinander verbunden.

Auf seiner der zweiten Lamelle 16 zugewandten Seite weist die Gabel 36 zwei Seitenstege 40 auf, deren Abstand voneinander geringfügig größer als die Dicke der zweiten Lamelle 16 ist. Zwischen den beiden Seitenstegen 40 erstreckt sich ein Quersteg 42.

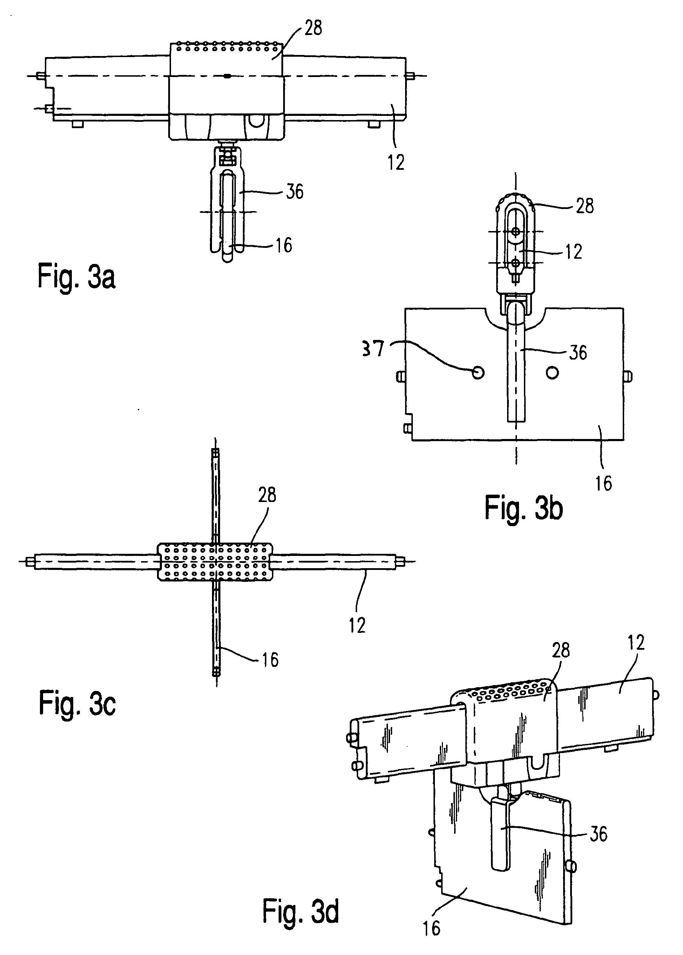

Die Gabel 36 ist mit den beiden Seitenstegen frei auf die zweite Lamelle 16 aufgesteckt, so daß sic die beiden Seitenstege 40 frei entlang der Lamelle 16 bewegen können. Es sind lediglich zwei kleine Vorsprünge 37 (siehe Figur 3b) auf der Lamelle 16 vorgesehen, die als Anschlag für die Gabel 36 dienen und verhindern, daß die Gabel sich gegenüber der beispielsweise in Figur 3b gezeigten Stellung um 90° nach oben verschiebt und von der Lamelle abrutscht. Um der Gabel 36 eine große Beweglichkeit zu ermöglichen, ist zweite Lamelle 16 auf ihrer der ersten Lamelle 16 zugewandten Seite mit einer Erweiterung 34 versehen.

Zur Verminderung der Reibung zwischen der Gabel 36 und der Lamelle 16 sind die beiden Seitenstege 40 mit mehreren Erhebungen 32 versehen, die an der Lamelle anliegen. Der sich dadurch ergebende Punktkontakt führt außerdem zu geringeren Geräuschen, wenn die Gabel 36 auf der Lamelle 16 verstellt wird.

Anhand der Figuren 3 bis 6 werden nun verschiedene Verstellzustände der ersten und der zweiten Lamelle 12, 16 beschrieben, die durch Betätigung des Bedienelements 12 erhalten werden können.

In dem in Figur 3 dargestellten Zustand befinden sich die erste und die zweite Lamelle (und die mit der ersten und der zweiten Lamelle gekoppelten weiteren Lamellen) im nicht verschwenkten Zustand, in der Luft, die durch den Luftausströmer strömt, ohne Ablenkung gerade hindurchströmt.

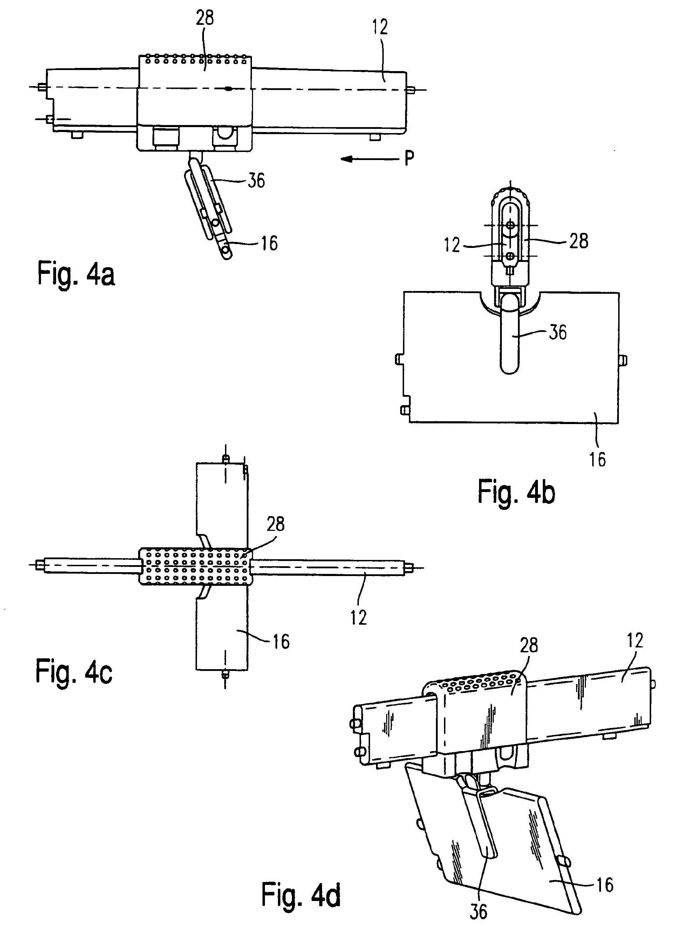

In Figur 4 ist ein Zustand gezeigt, in dem die zweite Lamelle 16 um etwa 20 Grad in eine Richtung verschwenkt ist. Dies wird dadurch erzielt, daß das Bedienelement 28 in der Richtung des Pfeils P von Figur 4a auf der ersten Lamelle 12 verschoben wurde. Die Seitenstege 40 verschwenken die zweite Lamelle 16. Dabei wird die Gabel 36 mittels des Clips 37 gedreht.

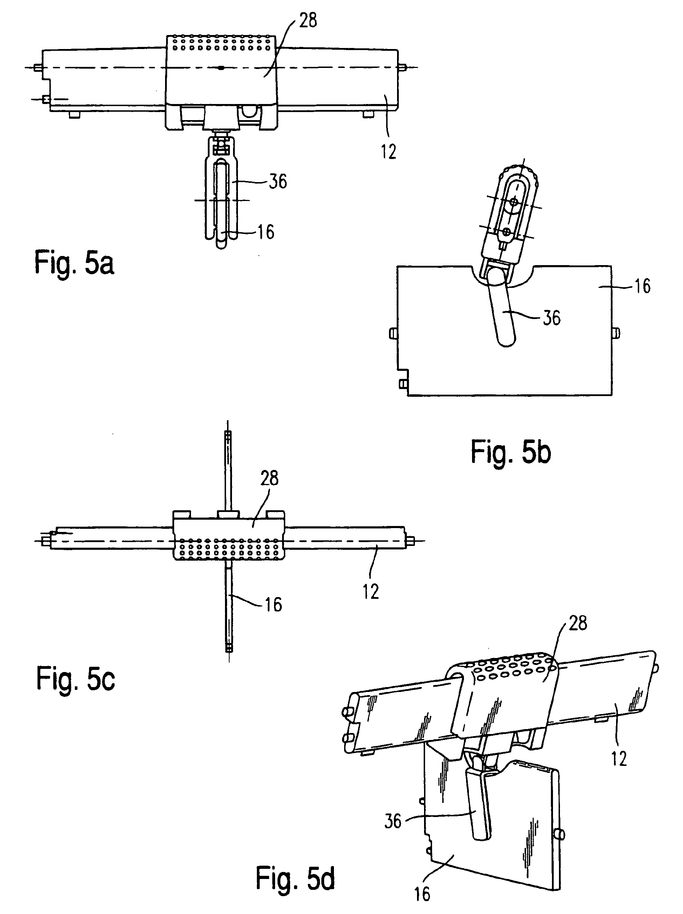

In Figur 5 ist ein Zustand gezeigt, in dem lediglich die erste Lamelle 12 um etwa 20 Grad verschwenkt ist; die zweite Lamelle 16 befindet sich weiterhin in ihrer unverschwenkten Stellung. Dieser Zustand wurde erreicht, indem die erste Lamelle 12 mittels des Bedienelements 28 um die Achse A verschwenkt wurde. Auch bei dieser Bewegung wird die Gabel 36 mittels des Clips 37 verschwenkt.

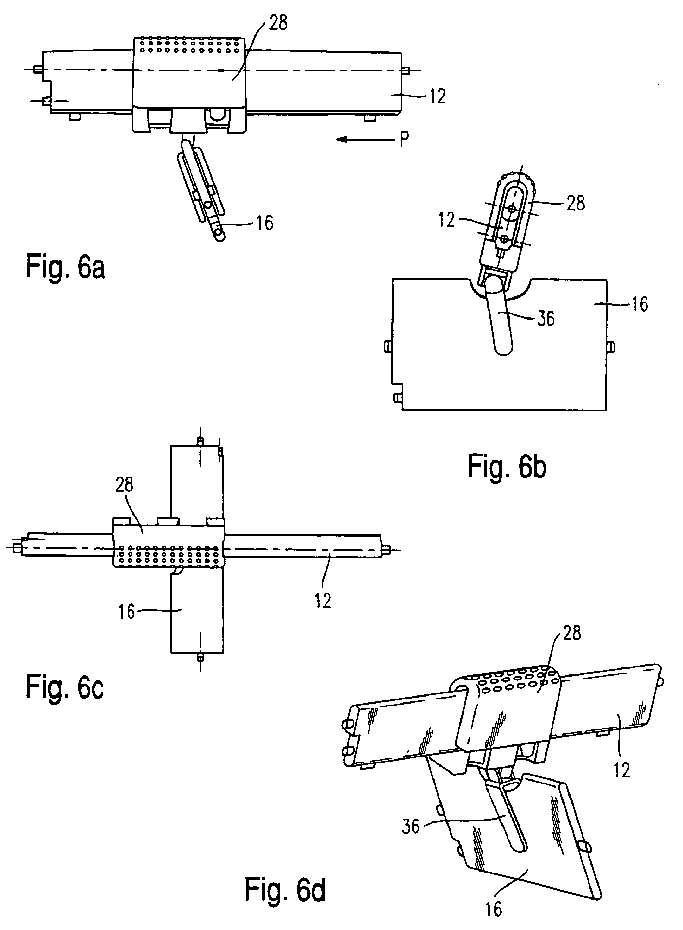

In Figur 6 ist ein Zustand gezeigt, in dem sowohl die erste Lamelle 12 als auch die zweite Lamelle 16 um jeweils 20 Grad verschwenkt sind. Zu diesem Zweck wurde zum einen das Bedienelement 28 in der Richtung des Pfeils P auf der ersten Lamelle 12 verschoben, und zum anderen wurde die erste Lamelle 12 durch Betätigung des Bedienelements 28 um die Achse A verschwenkt. Hieraus ergibt sich eine kombinierte Verschwenkbewegung der ersten Lamelle 12 und der zweiten Lamelle 16.

## Patentansprüche

1. Lamellenbetätigungssystem, insbesondere für einen Luftausströmer zur Fahrzeugklimatisierung, mit einer ersten Lamelle (12), die um eine erste Achse (A) schwenkbar in einem Rahmen (10) gehalten ist, und einer zweiten Lamelle (16), die um eine zweite Achse (B) schwenkbar in dem Rahmen gehalten ist, wobei auf der ersten Lamelle ein Bedienelement (28) angebracht ist, **dadurch gekennzeichnet, daß** das Bedienelement über ein Schiebe-/Kardangelenk (32, 36, 37, 38, 42) mit der zweiten Lamelle (16) verbunden ist.

2. Lamellenbetätigungssystem nach Anspruch 1, **dadurch gekennzeichnet, daß** das Bedienelement (28) auf der ersten Lamelle (12) parallel zur ersten Achse (A) verschiebbar ist.

3. Lamellenbetätigungssystem nach Anspruch 1 oder Anspruch 2, **dadurch gekennzeichnet, daß** das Schiebe-/Kardangelenk eine Gabel (36) aufweist, die mit der ersten und der zweiten Lamelle (12, 16) verbunden ist.

4. Lamellenbetätigungssystem nach Anspruch 3, **dadurch gekennzeichnet, daß** die Gabel (36) an dem Bedienelement mittels eines Kardangelenks (37, 38) und an der zweiten Lamelle (16) mittels einer Kulissenführung (32, 42) befestigt ist.

5. Lamellenbetätigungssystem nach einem der Ansprüche 3 und 4, **dadurch gekennzeichnet, daß** die Gabel (36) zwei Seitenstege (40) aufweist, die sich an den Außenflächen der zweiten Lamelle (16) abstützen.

6. Lamellenbetätigungssystem nach Anspruch 5, **dadurch gekennzeichnet, daß** die Seitenstege (40) mehrere Erhebungen (37) aufweist, mittels denen sie an der Lamelle (16) anliegen.

7. Lamellenbetätigungssystem nach einem der vorhergehenden Ansprüche, **dadurch gekennzeichnet, daß** die erste und die zweite Achse (A, B) zueinander senkrecht sind.

8. Lamellenbetätigungssystem nach einem der vorhergehenden Ansprüche, **dadurch gekennzeichnet, daß** zusätzlich zur ersten Lamelle (12) weitere Lamellen (14) vorgesehen sind, die mit der ersten Lamelle (12) so gekoppelt sind, daß sie sich in derselben Ausrichtung befinden wie die erste Lamelle.

9. Lamellenbetätigungssystem nach einem der vorhergehenden Ansprüche, **dadurch gekennzeichnet, daß** zusätzlich zur zweiten Lamelle (16) weitere Lamellen (18) vorgesehen sind, die mit der zweiten Lamelle so gekoppelt sind, daß sie sich in derselben Ausrichtung befinden wie die zweite Lamelle.

10. Lamellenbetätigungssystem nach Anspruch 8 oder Anspruch 9, **dadurch gekennzeichnet, daß** die erste bzw. die zweite Lamelle mit einem Lagerzapfen (22; 26) versehen ist, an der eine Koppelstange (20; 24) angreift.

11. Lamellenbetätigungssystem nach einem der Ansprüche 8 bis 10, **dadurch gekennzeichnet, daß** die weiteren Lamellen parallel mit der ersten bzw. zweiten Lamelle ausgerichtet sind.

## Claims

1. A vane actuating system, in particular for an air vent for vehicle air-conditioning, having a first vane (12) which is held in a frame (10) for pivoting movement about a first axis (A), and a second vane (16) which is held in the frame for pivoting movement about a second axis (B), an operating element (28) being arranged on the first vane, **characterized in that** the operating element is connected with the second vane (16) by means of a sliding-/cardan joint (32, 36, 37, 38, 42).

2. The vane actuating system according to claim 1, **characterized in that** the operating element (28) is moveable on the first vane (12) parallel to the first axis (A).

3. The vane actuating system according to claim 1 or claim 2, **characterized in that** the sliding-/cardan joint has a fork (36) which is connected with the first and second vanes (12, 16).

4. The vane actuating system according to claim 3, **characterized in that** the fork (36) is fastened to the operating element by means of a cardan joint (37, 38) and to the second vane (16) by means of a slotted guide (32, 42).

5. The vane actuating system according to any of claims 3 and 4, **characterized in that** the fork (36) has two side webs (40) which rest against the outer surfaces of the second vane (16).

6. The vane actuating system according to claim 5, **characterized in that** the side webs (40) have several elevations (37) by means of which they lie against the vane (16).

7. The vane actuating system according to any of the preceding claims, **characterized in that** the first and second axes (A, B) are perpendicular to each other.

8. The vane actuating system according to any of the preceding claims, **characterized in that** in addition to the first vane (12), further vanes (14) are provided which are coupled with the first vane (12) such that they have the same orientation as the first vane.

9. The vane actuating system according to any of the preceding claims, **characterized in that** in addition to the second vane (16), further vanes (18) are provided which are coupled with the second vane such that they have the same orientation as the second vane.

10. The vane actuating system according to claim 8 or claim 9, **characterized in that** the first and second vanes are each provided with a bearing pin (22; 26) engaged by a coupling rod (20; 24).

11. The vane actuating system according to any of claims 8 to 10, **characterized in that** the further vanes are aligned parallel with the first vane and the second vane, respectively.

## Revendications

1. Système d'actionnement de lamelles, en particulier pour un diffuseur d'air pour la climatisation de véhicules, comportant une première lamelle (12) qui est maintenue pivotante dans cadre (10) autour d'un premier axe (A), et une deuxième lamelle (16) qui est maintenue pivotante dans le cadre autour d'un deuxième axe (B), un élément de commande (28) étant monté sur la première lamelle, **caractérisé en ce que** l'élément de commande est relié à la deuxième lamelle (16) par un joint coulissant/joint de cardan (32, 36, 37, 38, 42).

2. Système d'actionnement de lamelles selon la revendication 1, **caractérisé en ce que** l'élément de commande (28) peut être déplacé sur la première lamelle (12) parallèlement au premier axe (A).

3. Système d'actionnement de lamelles selon la revendication 1 ou la revendication 2, **caractérisé en ce que** le joint coulissant/joint de cardan présente une fourche (12) qui est reliée aux première et deuxième lamelles (12, 16).

4. Système d'actionnement de lamelles selon la revendication 3, **caractérisé en ce que** la fourche est fixée sur l'élément de commande au moyen d'un joint de cardan (37, 38) et sur la deuxième lamelle (16) au moyen d'un guidage à coulisse (32, 42).

5. Système d'actionnement de lamelles selon l'une des revendications 3 et 4, **caractérisé en ce que** la fourche (36) présente deux barrettes latérales (40) qui prennent appui sur les surfaces extérieures de la deuxième lamelle (16).

6. Système d'actionnement de lamelles selon la revendication 5, **caractérisé en ce que** les barrettes latérales (40) présentent plusieurs bossages (37) par lesquels elles en sont appui sur la lamelle (16):

7. Système d'actionnement de lamelles selon l'une des revendications précédentes, **caractérisé en ce que** les premier et deuxième axes (A, B) sont perpendiculaires l'un à l'autre.

8. Système d'actionnement de lamelles selon l'une des revendications précédentes, **caractérisé en ce que** additionnellement à la première lamelle (12) sont prévues d'autres lamelles (14) qui sont accouplées à la première lamelle (12) de telle sorte qu'elles se trouvent dans la même orientation que la première lamelle.

9. Système d'actionnement de lamelles selon l'une des revendications précédentes, **caractérisé en ce que** additionnellement à la deuxième lamelle (16) sont prévues d'autres lamelles (18) qui sont accouplées à la deuxième lamelle de telle sorte qu'elles se trouvent dans la même orientation que la deuxième lamelle.

10. Système d'actionnement de lamelles selon la revendication 8 ou la revendication 9, **caractérisé en ce que** les première et deuxième lamelles sont pourvues respectivement d'un tourillon (22 ; 26) sur lequel s'engage une tige d'accouplement (20 ; 24).

11. Système d'actionnement de lamelles selon l'une des revendications 8 à 10, **caractérisé en ce que** les autres lamelles sont orientées parallèlement aux première et deuxième lamelles, respectivement.
